# EUROPÄISCHE PATENTSCHRIFT

(11) **EP 3 048 265 B1**
(45) Veröffentlichungstag und Bekanntmachung des Hinweises auf die Patenterteilung: **11.07.2018**
(21) Anmeldenummer: 16151568.9
(22) Anmeldetag: 15.01.2016
(51) Int. Cl.: F01D 17/14, F01D 9/04, F02B 37/24, F01D 17/16

(54) **VERFAHREN ZUM HERSTELLEN EINER VARIABLEN TURBINENGEOMETRIE**
METHOD FOR PRODUCING A VARIABLE TURBINE GEOMETRY
PROCÉDÉ DE FABRICATION D'UNE GÉOMÉTRIE VARIABLE DE TURBINE

(30) Priorität: 22.01.2015 DE 102015201078
(43) Veröffentlichungstag der Anmeldung: 27.07.2016
(73) Patentinhaber: BMTS Technology GmbH & Co. KG, 70376 Stuttgart (DE)
(72) Erfinder: NAUNHEIM, Dirk, 70176 Stuttgart (DE); BOLBOLAN, Daren, Hochdorf, 73269 (US)
(74) Vertreter: BRP Renaud & Partner mbB Rechtsanwälte Patentanwälte Steuerberater

(56) Entgegenhaltungen:
- EP-A1- 2 336 492
- EP-A2- 2 118 450
- DE-A1-102011 079 580
- DE-T2- 60 009 298

## Beschreibung

Die vorliegende Erfindung betrifft ein Verfahren zum Herstellen einer variablen Turbinengeometrie für eine Ladeeinrichtung sowie eine solche variable Turbinengeometrie. Die Erfindung betrifft des Weiteren eine Ladeeinrichtung, insbesondere einen Abgasturbolader, mit einer solchen variablen Turbinengeometrie.

Ladeeinrichtungen, insbesondere Abgasturbolader, sind aus dem Stand der Technik hinlänglich bekannt. Dabei wird ein Turbinenrad von einem antreibenden Fluid, insbesondere vom Abgas, angetrieben und überträgt diese Antriebsleistung über eine Welle auf ein Verdichterrad. Um insbesondere bei verschiedenen Betriebspunkten die Leistung der Ladeeinrichtung zu erhöhen, ist es ferner bekannt, die Ladeeinrichtung mit einer variablen Turbinengeometrie auszustatten, die das Turbinenrad mit einer Mehrzahl von Leitschaufeln umgibt. Mittels der Leitschaufeln ist es dabei möglich, die Strömung des antreibenden Fluids, das heißt insbesondere des Abgases, zum Turbinenrad zu beeinflussen. Dabei ist es beispielsweise möglich, in einem geschlossenen Zustand der Leitschaufeln einen Strömungsquerschnitt für das antreibende Fluid bzw. Abgas zu verringern, so dass das antreibende Fluid mit einer erhöhten Geschwindigkeit auf das Turbinenrad trifft und dieses schneller antreibt. Die Leitschaufeln sind gewöhnlich in einem Schaufellagerring drehbar gelagert. Auf der vom Schaufellagerring abgewandten Seite der Leitschaufeln ist gewöhnlich eine Deckscheibe angeordnet. Dabei verbleibt zwischen den Leitschaufeln und der Deckscheibe ein Spalt, dessen Größe zur Effizienzverbesserung der variablen Turbinengeometrie möglichst klein gehalten werden muss.

Hierzu wird in der EP 0 226 444 B1 vorgeschlagen, zwischen dem Schaufellagerring und der Deckscheibe Abstandshalter einzusetzen, welche einen festen Abstand zwischen der Deckscheibe und dem Schaufellagerring schaffen.

In der EP 1 577 503 B1 wird zudem vorgeschlagen, hierzu die Deckscheibe und/oder den Schaufellagerring gestuft auszubilden oder mit Stufen zu versehen.

Die EP 2 336 492 A1 zeigt eine Ladeeinrichtung mit mehreren Leitschaufeln, die zur Vermeidung von Leckagen an ihrer Stirnseiten jeweils ein Winglet aufweisen. Die Stirnseiten können dabei in der Endmontage bearbeitet werden.

Nachteilig bei variablen Turbinengeometrien ist es insbesondere, dass die Leitschaufeln mit Fertigungstoleranzen behaftet sind. Das heißt, dass der Spalt zwischen der jeweiligen Leitschaufel und der Deckscheibe bedingt durch die Fertigungstoleranzen variiert. In der Folge kann der Spalt nicht optimal minimiert werden, insbesondere weil zur Funktionsfähigkeit der variablen Turbinengeometrie Rücksicht auf die maximal möglichen Toleranzabweichungen genommen werden muss.

Die vorliegende Erfindung beschäftigt sich daher mit dem Problem, für ein Verfahren zum Herstellen einer variablen Turbinengeometrie sowie für eine solche variable Turbinengeometrie und eine solche Ladeeinrichtung, verbesserte oder zumindest alternative Ausführungsformen anzugeben, die sich insbesondere durch eine vereinfachte Herstellung und/oder durch eine verbesserte Effizienz auszeichnen.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung basiert auf dem Grundgedanken, zum Herstellen einer variablen Turbinengeometrie zunächst zumindest zwei Leitschaufeln in einem Schaufellagerring der variablen Turbinengeometrie einzusetzen und dann zumindest zwei der in den Schaufellagerring eingesetzten Leitschaufeln auf ihrer vom Schaufellagerring abgewandten Stirnseiten gemeinsam zu bearbeiten. In der Folge können Fertigungstoleranzen der Leitschaufeln minimiert werden und/oder die Fertigungstoleranzen der Leitschaufeln angeglichen werden. Hierdurch ist es insbesondere möglich, bei der in einer zugehörigen Ladeeinrichtung montierten variablen Turbinengeometrie einen Abstand zu einer den Stirnseiten der Leitschaufeln gegenüberliegenden Deckscheibe effektiv zu minimieren, um eine Leistungssteigerung der variablen Turbinengeometrie und/oder der Ladeeinrichtung zu erreichen. Dem Erfindungsgedanken entsprechend, werden also zunächst zumindest zwei Leitschaufeln der variablen Turbinengeometrie in den Schaufellagerring eingesetzt und anschließend zumindest zwei der Leitschaufeln im montierten Zustand, das heißt im in den Schaufellagerring eingesetzten Zustand, an ihren vom Schaufellagerring abgewandten Stirnseiten gemeinsam bearbeitet. Die Bearbeitung erfolgt dabei derart, dass hierdurch eine Endform der Stirnseiten der bearbeiteten Leitschaufeln hergestellt wird.

Die gemeinsame Bearbeitung der Stirnseiten heißt hierbei insbesondere, dass die Stirnseiten im gleichen Arbeitsgang bearbeitet werden. Die Stirnseiten werden also insbesondere gleichzeitig und/oder mit dem gleichen Werkzeug bzw. den gleichen Werkzeugen bearbeitet, um die jeweilige Endform der Stirnseiten herzustellen.

Besonders bevorzugt ist es ferner, wenn sämtliche Leitschaufeln der variablen Turbinengeometrie zunächst in den Schaufellagerring eingesetzt und anschließend an ihren Stirnseiten zur Herstellung der Endform gemeinsam bearbeitet werden.

Bevorzugt wird die variable Turbinengeometrie vor der Bearbeitung der Stirnseiten soweit hergestellt bzw. montiert, dass nach der Bearbeitung der Stirnseiten keine oder nur noch geringfügige Verschiebungen der Leitschaufeln erfolgen. Solche Verschiebungen beziehen sich insbesondere entlang einer Drehachse der jeweiligen Leitschaufel. Das heißt, dass die variable Turbinengeometrie vor der Bearbeitung der Stirnseiten soweit montiert wird, dass sich anschließend ein Abstand zwischen den entsprechenden Leitschaufeln und dem Schaufellagerring in Folge von Verschiebungen der Leitschaufeln nicht oder lediglich geringfügig ändert. Somit kommt es beim in die zugehörige Ladeeinrichtung montierten Zustand der variablen Turbinengeometrie nur zu entsprechend geringfügigen Änderungen der Abstände der Leitschaufeln zur Deckscheibe.

Erfindungsgemäß erfolgt die Bearbeitung der Stirnseiten derart, dass die Stirnseiten der bearbeiteten Leitschaufeln, das heißt die Stirnseiten der die Endform aufweisenden Leitschaufeln, in einer gemeinsamen Ebene liegen. Somit kann insbesondere der Abstand zwischen den Stirnseiten der Leitschaufeln und der Deckscheibe der Ladeeinrichtung genauer eingestellt und insbesondere kleiner dimensioniert werden. Das heißt, dass hierdurch eine Realisierung der variablen Turbinengeometrie und der Ladeeinrichtung möglich ist, bei der die bearbeiteten Stirnseiten jeweils den gleichen Abstand zur Deckscheibe aufweisen.

Die Bearbeitung der jeweiligen Stirnseite kann auf beliebige Weise erfolgen, sofern hierdurch eine Änderung der Stirnseite zur Endform einhergeht. Vorstellbar ist es insbesondere, einen gewissen Anteil der Stirnfläche abzutragen. Hierzu können beliebige Werkzeuge zum Einsatz kommen. Zum Bearbeiten der Stirnseiten kommen beispielsweise Strahlen, beispielsweise elektromagnetische Strahlen, insbesondere mittels einer Lasereinrichtung, und/oder Elektronenstrahlen, zum Einsatz.

Alternativ oder zusätzlich kann die jeweilige Stirnseite spanend bearbeitet werden. Das heißt, dass die jeweilige Stirnseite insbesondere geschliffen und/oder gehobelt und/oder gefräst und dergleichen wird.

Als vorteilhaft erweist es sich, wenn die zu bearbeitenden Leitschaufeln vor der Bearbeitung fixiert werden. Hierdurch wird gewährleistet, dass die Leitschaufeln während der Bearbeitung unbeweglich, insbesondere bezüglich des Schaufellagerrings unbeweglich, angeordnet sind. Somit wird eine genauere Bearbeitung der Leitschaufeln möglich, wodurch insbesondere Fertigungstoleranzen weiter gesenkt werden können.

Vorstellbar ist es, dass zumindest eine der zu bearbeitenden Leitschaufeln an ihrer Stirnseite vor der gemeinsamen Bearbeitung zum Herstellen der Endform unbearbeitet ist. Das heißt, dass diese Stirnseite vor der Bearbeitung zum Herstellung der Endform im "Rohzustand" verbleibt. Hierdurch kann die Herstellung der Leitschaufeln, einfacher und kostengünstiger realisiert werden.

Gemäß einer vorteilhaften Ausführungsform wird die variable Turbinengeometrie nach der Bearbeitung der Stirnseiten gereinigt, um insbesondere durch die Bearbeitung anfallende Materialreste zu entfernen. Hierdurch wird insbesondere ein reibungsfreier Betrieb der variablen Turbinengeometrie gewährleistet oder zumindest die Gefahr von entsprechenden Betriebsstörungen zumindest reduziert.

Bei einer vorteilhaften Weiterbildung ist die variable Turbinengeometrie als eine vorgefertigte Baugruppe ausgebildet. Die Baugruppe weist hierbei insbesondere den Schaufellagerring und die darin gelagerten Leitschaufeln auf. Hierdurch ist eine vereinfachte Montage der variablen Turbinengeometrie in die zugehörige Ladeeinrichtung möglich. Insbesondere kann hierdurch ein Abstand bzw. Spalt zwischen den Stirnseiten der Leitschaufeln und der Deckscheibe verringert werden, womit eine Effizienzsteigerung der variablen Turbinengeometrie und somit der Ladeeinrichtung einhergeht.

Es versteht sich, dass neben dem Verfahren zum Herstellen einer solchen variablen Turbinengeometrie auch eine Ladeeinrichtung mit einer solchen variablen Turbinengeometrie zum Gegenstand dieser Erfindung gehört. In gleicher Weise kann natürlich auch eine variable Verdichtergeometrie hergestellt werden.

Dabei kann die Ladeinrichtung auf beliebige Weise ausgestaltet sein. Vorstellbar ist insbesondere, dass die Ladeeinrichtung als ein Abgasturbolader ausgebildet ist, die turbinenseitig mit Abgas beaufschlagt wird, das durch die variable Turbinengeometrie zu einem Turbinenrad gelangt. Ein solcher Abgasturbolader kann dabei bei einer Brennkraftmaschine eines Fahrzeugs zum Einsatz kommen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Schnitt durch eine Ladeeinrichtung,
- Fig. 2: eine Draufsicht auf einer variablen Turbinengeometrie.

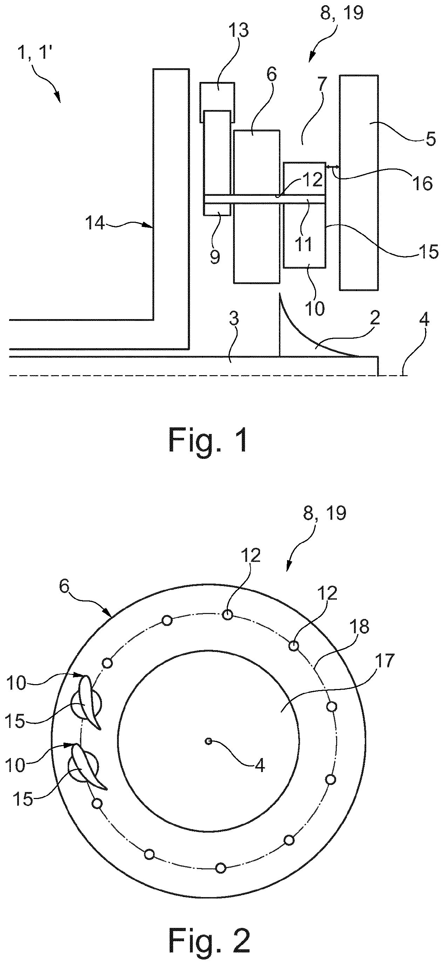

Fig. 1 zeigt einen Schnitt durch eine Ladeeinrichtung 1, insbesondere durch einen Abgasturbolader 1', wobei die Ladeeinrichtung 1 lediglich teilweise zu sehen ist. Die Ladeeinrichtung 1 weist ein Turbinenrad 2 auf, das drehfest mit einer Welle 3 verbunden ist. Das Turbinenrad 2 und die Welle 3 sind um eine Rotationsachse 4 rotierbar, wobei bezüglich der Rotationsachse 4 lediglich der obere Teil der Ladeeinrichtung 1 zu sehen ist. Mittels der Welle 3 kann eine Rotation des Turbinenrads 2 auf ein hier nicht gezeigtes Verdichterrad der Ladeeinrichtung 1 übertragen werden. Das Turbinenrad 2 wird dabei durch ein Fluid, insbesondere durch das von einer Brennkraftmaschine stammende Abgas, angetrieben, das durch einen zwischen einer Deckscheibe 5 und einem Schaufellagerring 6 ausgebildeten Kanal 7 zum Turbinenrad 2 strömt. Der Schaufellagerring 6 ist hierbei Bestandteile einer variablen Turbinengeometrie 8, die zudem einen auf der vom Kanal 7 abgewandten Seite des Schaufellagerrings 6 angeordneten Verstellring 13 sowie zumindest eine Leitschaufel 10 aufweist, die auf der vom Verstellring 13 abgewandten Seite des Schaufellagerrings 6 angeordnet ist. Hierbei ist in Fig. 1 lediglich eine solche Leitschaufel 10 zu sehen. Die Leitschaufel 10 weist einen Schaufelzapfen 11 auf, der durch eine Aufnahme 12 des Schaufellagerrings 6 geführt und über einen Stellhebel 9 mit dem Verstellring 13 gekoppelt ist. Der Verstellring 13 wird über eine Stelleinrichtung verstellt, wodurch die über den Schaufelzapfen 11 im Schaufellagerring 6 gelagerte Leitschaufel 10 entsprechend verstellt wird. Hierdurch kann ein Querschnitt des Kanals 7 verändert und somit die Strömung des das Turbinenrad 2 antreibenden Fluids eingestellt werden. Die variable Turbinengeometrie 8 kann dabei in einem hier nicht gezeigten Turbinengehäuse angeordnet sein, in dem auch die Deckscheibe 5 angeordnet ist oder das die Deckscheibe 5 als Bestandteil aufweist. Die Welle 3 ist in einem Lagergehäuse 14 gelagert.

In Fig. 1 ist zu erkennen, dass eine der Deckscheibe 5 zugewandte bzw. vom Schaufellagerring 6 abgewandte Stirnseite 15 der Leitschaufel 10 beabstandet zur Deckscheibe 5 angeordnet ist. Zwischen der Leitschaufel 10 bzw. ihrer Stirnseite 15 und der Deckscheibe 5 ist ein Spalt 16 ausgebildet. Die Verkleinerung dieses Spaltes 16 führt dabei zu einer Effizienzsteigerung der variablen Turbinengeometrie 8 bzw. der Ladeeinrichtung 1.

Fig. 2 zeigt eine Draufsicht auf die variable Turbinengeometrie 8. Dabei ist zu erkennen, dass der Schaufellagerring 6 ringförmig ausgebildet ist und eine zentrale Öffnung 17 aufweist, durch die beim in der Ladeeinrichtung 1 montierten Zustand die Welle 3 geführt ist. Zudem ist zu erkennen, dass der Schaufellagerring 6 mehrere solche Aufnahmen 12 aufweist, die entlang eines Kreises 18 gleichmäßig angeordnet sind. In der jeweiligen Aufnahme 12 ist eine solche Leitschaufel 10 drehbar gelagert, wobei in Fig. 2 lediglich zwei solche Leitschaufeln 10 dargestellt sind, deren Stirnseiten 15 zu sehen sind. Um den Spalt 16 zwischen den Stirnseiten 15 der Leitschaufeln 10 und der Deckscheibe 5 zu reduzieren, insbesondere zu minimieren, wird die variable Turbinengeometrie 8 wie nachfolgend beschrieben hergestellt:
Zunächst werden die Leitschaufeln 10 in den Schaufellagering 6 eingesetzt, indem die jeweiligen Schaufelzapfen 11 in eine solche zugehörige Aufnahme 12 eingebracht werden. Zusätzlich kann der jeweilige Schaufelzapfen 11 über den Stellhebel 9 mit dem Verstellring 13 verbunden werden. Anschließend werden die Stirnseiten 15 der Leitschaufeln 10 gemeinsam bearbeitet, um eine Endform der Stirnseiten 15 der Leitschaufeln 10 herzustellen. Die Bearbeitung erfolgt dabei derart, dass die Stirnseiten 15 der Leitschaufeln 10 im Wesentlichen in einer Ebene liegen. In der Folge kann der Spalt 16 kleiner ausfallen und minimiert werden. Insbesondere kann bei der Montage der variablen Turbinengeometrie 8 in die Ladeeinrichtung 1 ein entsprechender Abstand zwischen der Deckscheibe 5 und den Stirnseiten 15 und somit der Spalt 16 verkleinert werden. Hierdurch wird eine durch Fertigungstoleranzen der Leitschaufeln 10 bedingte negative Beeinflussung der Verkleinerung des Spaltes 16 vermieden oder zumindest reduziert. Dabei können die Stirnseiten 15 der Leitschaufeln 10 vor der gemeinsamen Bearbeitung zum Herstellen der Endform, das heißt der endgültigen Form der Stirnseiten 15, unbearbeitet sein.

Die Bearbeitung der Stirnseiten 15 zum Herstellen der Endform erfolgt hierbei auf beliebige Weise. Insbesondere können die Stirnseiten 15 der Leitschaufeln 10 gemeinsam spanend bearbeitet werden, um die Endform der Stirnseiten 15 herzustellen. Vorteilhaft ist es dabei, wenn die Leitschaufeln 10 vor der Bearbeitung zum Herstellen der Endform der Stirnseiten 15 fixiert werden. Diese Fixierung kann beispielsweise mittels des Verstellrings 13 erfolgen. Es sind jedoch auch andere Arten der Fixierung vorstellbar, bei denen insbesondere der jeweilige Schaufelzapfen 11 fixiert wird, um eine entsprechende Bewegung der zugehörigen Leitschaufeln 10, insbesondere bezüglich des Schaufellagerrings 6 zu verhindern oder zumindest zu reduzieren.

Dabei wird die variable Turbinengeometrie 8 nach der Bearbeitung der Stirnseiten 15 zur Endform gereinigt, um insbesondere durch die Bearbeitung anfallende Materialreste zu entfernen. Die variable Turbinengeometrie 8 ist bevorzugt als eine vorgefertigte Baugruppe 19 ausgebildet, die zumindest den Schaufellagerring 6 und die Leitschaufeln 10 mit den die Endform aufweisenden Stirnseiten 15 aufweist. Alternativ können auch der Verstellring 13 Bestandteil der Baugruppe 19 sein. Hierdurch wird die Montage der variablen Turbinengeometrie 8 in die Ladeeinrichtung 1 vereinfacht.

## Patentansprüche

1. Verfahren zum Herstellen einer variablen Turbinengeometrie (8) einer Ladeeinrichtung (1), wobei
- zumindest zwei Leitschaufeln (10) in einen Schaufellagerring (6) eingesetzt werden,
- zumindest zwei der Leitschaufeln (10) im montierten Zustand an ihren vom Schaufellagerring (6) abgewandten Stirnseiten (15) zur Herstellung einer Endform der Stirnseiten (15) gemeinsam bearbeitet werden,
- die Bearbeitung derart erfolgt, dass die Stirnseiten (15) der bearbeiteten Leitschaufeln (10) in einer gemeinsamen Ebene liegen.

2. Verfahren nach Anspruch 1,
**dadurch gekennzeichnet,**
**dass** die Leitschaufeln (10) an ihren Stirnseiten (15) spanend bearbeitet werden.

3. Verfahren nach Anspruch 1 oder 2,
**dadurch gekennzeichnet,**
**dass** alle Leitschaufeln (10) der variablen Turbinengeometrie (8) in den Schaufellagerring (6) eingesetzt und anschließend gemeinsam an ihren Stirnseiten (15) bearbeitet werden.

4. Verfahren nach einem der Ansprüche 1 bis 3,
**dadurch gekennzeichnet,**
**dass** die zu bearbeitenden Leitschaufeln (10) vor der Bearbeitung fixiert werden.

5. Verfahren nach einem der Ansprüche 1 bis 4,
**dadurch gekennzeichnet,**
**dass** zumindest eine der zu bearbeitenden Leitschaufeln (10) an ihrer Stirnseite (15) vor der Bearbeitung im unbearbeiteten Zustand verbleibt.

6. Verfahren nach einem der Ansprüche 1 bis 5,
**dadurch gekennzeichnet,**
**dass** die variable Turbinengeometrie (8) nach der Bearbeitung gereinigt wird.

## Claims

1. Method for producing a variable turbine geometry (8) of a charging device (1), wherein
- at least two guide blades (10) are inserted into a blade mounting ring (6),
- at least two of the guide blades (10), in the mounted state, are jointly machined on the end sides (15) thereof facing away from the blade mounting ring (6) in order to produce a final shape of the end sides (15),
- the machining takes place in such a manner that the end sides (15) of the machined guide blades (10) lie in a common plane.

2. Method according to Claim 1,
**characterized in that**
the guide blades (10) are machined on the end sides (15) thereof by removal of material.

3. Method according to Claim 1 or 2,
**characterized in that**
all of the guide blades (10) of the variable turbine geometry (8) are inserted into the blade mounting ring (6) and are subsequently jointly machined on the end sides (15) thereof.

4. Method according to one of Claims 1 to 3,
**characterized in that**
the guide blades (10) to be machined are secured prior to the machining.

5. Method according to one of Claims 1 to 4,
**characterized in that**
at least one of the guide blades (10) to be machined remains in the unmachined state on the end side (15) thereof prior to the machining.

6. Method according to one of Claims 1 to 6,
**characterized in that**
the variable turbine geometry (8) is cleaned after the machining.

## Revendications

1. Procédé de fabrication d'une géométrie de turbine variable (8) d'un dispositif de charge (1), dans lequel
- au moins deux pales directrices (10) sont utilisées dans un anneau de palier de pale (6),
- au moins deux des pales directrices (10) sont usinées ensemble dans l'état monté sur leurs côtés avant (15) éloignés de l'anneau de palier de pale (6) pour la fabrication d'une forme finale des côtés avant (15),
- l'usinage est effectué de telle manière que les côtés avant (15) des pales directrices (10) usinées se situent dans un plan commun.

2. Procédé selon la revendication 1,
**caractérisé en ce que**,
les pales directrices (10) sont usinées par enlèvement de copeaux sur leurs côtés avant (15).

3. Procédé selon la revendication 1 ou 2,
**caractérisé en ce**
**que** toutes les pales directrices (10) de la géométrie de turbine variable (8) sont insérées dans l'anneau de palier de pale (6) et sont ensuite usinées ensemble sur leurs côtés avant (15).

4. Procédé selon l'une quelconque des revendications 1 à 3,
**caractérisé en ce**
**que** les pales directrices (10) à usiner sont fixées avant l'usinage.

5. Procédé selon l'une quelconque des revendications 1 à 4,
**caractérisé en ce**
**qu'**au moins une des pales directrices (10) à usiner reste sur son côté avant (15) avant l'usinage dans l'état non usiné.

6. Procédé selon l'une quelconque des revendications 1 à 5,
**caractérisé en ce**
**que** la géométrie de turbine variable (8) est nettoyée après l'usinage.
